(19) **Europäisches Patentamt / European Patent Office / Office européen des brevets**

(11) **EP 2 665 312 B1**

(12) **EUROPEAN PATENT SPECIFICATION**

(45) Date of publication and mention of the grant of the patent:
**04.06.2014 Bulletin 2014/23**

(51) Int Cl.:
*H04W 52/02* (2009.01)

(21) Application number: **12168125.8**

(22) Date of filing: **15.05.2012**

(54) **Cell Activation and Deactivation in Heterogeneous Networks**

Zellenaktivierung und -deaktivierung in heterogenen Netzwerken

Activation et désactivation de cellule dans des réseaux hétérogènes

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.11.2013 Bulletin 2013/47**

(73) Proprietor: **FUJITSU LIMITED**
**Kawasaki-shi,**
**Kanagawa 211-8588 (JP)**

(72) Inventors:
• **Hunukumbure, Mythri**
**Hayes, Middlesex UB4 8FE (GB)**
• **Xiao, Hui**
**Hayes, Middlesex UB4 8FE (GB)**

(74) Representative: **Stebbing, Timothy Charles**
**Haseltine Lake LLP**
**Lincoln House, 5th Floor**
**300 High Holborn**
**London WC1V 7JH (GB)**

(56) References cited:
**WO-A1-2009/115554    US-A1- 2011 312 370**
**US-A1- 2012 082 064**

• **3GPP: "3rd Generation Partnership Project; Technical Specification Group Radio Access Networks; Evolved Universal Terrestrial Radio Access (E-UTRA); Potential solutions for energy saving for E-UTRAN (Release 10)", 3GPP DRAFT; TR 36927 V1.1.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Taipei, Taiwan; 20110221, 6 March 2011 (2011-03-06), XP050497946, [retrieved on 2011-03-06]**
• **NOKIA SIEMENS NETWORKS: "Negotiation-based algorithm for ES compensations", 3GPP DRAFT; R3-102857 NEGOTIATION-BASED_ ALGORITHM_FOR_ES_COMPENS ATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 2 October 2010 (2010-10-02), XP050453655, [retrieved on 2010-10-02]**

**Description**

Field of the Invention

The present invention relates to cellular wireless networks, more particularly to heterogeneous networks (Het-Nets).

Background of the Invention

The global information and communication technology (ICT) industry is a fast growing contributor to worldwide greenhouse gas emissions. According to 2008 figures, it was estimated that 3 percent of worldwide energy consumption was caused by the ICT infrastructure that generated about 2 percent of worldwide $CO_2$ emissions. Optimizing the energy efficiency of wireless communications not only reduces environment impact, but also cuts overall network costs and helps make communication more practical and affordable in a pervasive setting.

Cellular wireless networks are widely known in which base stations (BSs) communicate with user equipments (UEs) (also called terminals, or subscriber or mobile stations) within range of the BSs.

The geographical areas covered by base stations are generally referred to as cells, and typically many BSs are provided in appropriate locations so as to form a network or system covering a wide geographical area more or less seamlessly with adjacent and/or overlapping cells. (In this specification, the terms "system" and "network" are used synonymously except where the context requires otherwise). In each cell, the available bandwidth is divided into individual resource allocations for the user equipments which it serves. The user equipments are generally mobile and therefore may move among the cells, prompting a need for handovers between the base stations of adjacent and/or overlapping cells. A user equipment may be in range of (i.e. able to detect signals from) several cells at the same time, and it is possible for one cell to be wholly contained within a larger cell.

It is widely assumed that future cellular wireless networks will adopt the structure of the so-called heterogeneous network, composed of two or more different kinds of cell.

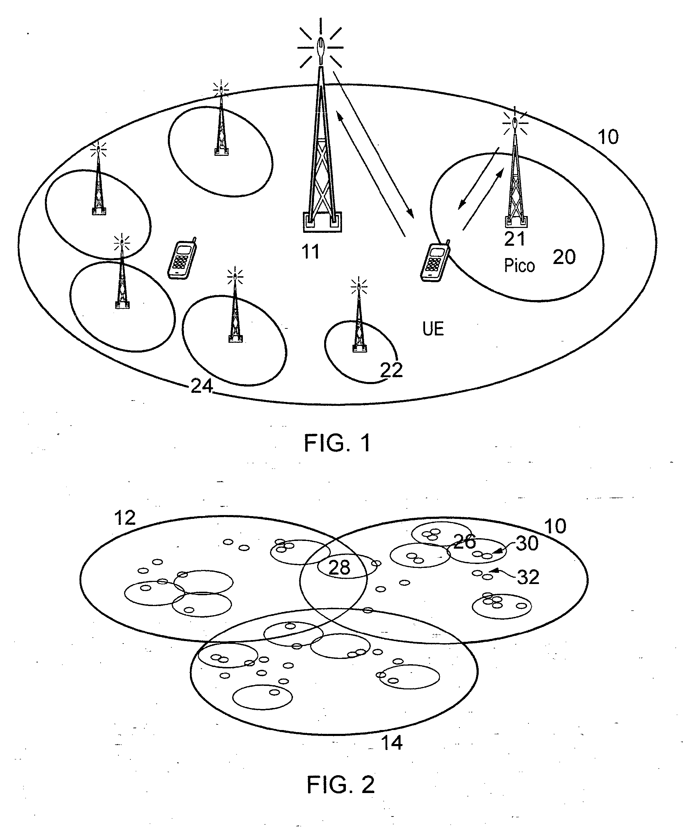

Figure 1 depicts a simple heterogeneous network. The large ellipse 10 represents the coverage area or footprint of a Macro cell having a base station (Macro BS) 11. The smaller ellipses 20, 22 and 24 represent Micro cells within the coverage area of Macro cell 10, each having a respective base station (Micro BS), one such base station being shown at 21. Here, "Macro" cell is a cell providing basic "underlay" coverage in the network of a certain area, and the Micro cells are overlaid over the Macro cell using separate frequency spectrums for capacity boosting purposes particularly within so-called "hot spot zones". A user UE is able to communicate both with Macro BS 11 and Micro BS 21 as indicated by the arrows in the Figure.

Nowadays cellular operators try to optimize their network performance and maintain network functionalities with minimal human intervention, which can not only cut the operational costs but also improve service quality. This is the so-called Self Organising Network (SON), and it is assumed that there is a SON server located somewhere in this kind of network collecting information from base stations, analyzing the information and instructing the base stations what actions should be taken in order to optimize the system performance against certain requirements.

The Radio Access Technology (RAT) adopted by the base stations could be any kind, for example, 3G or 4G. Here we assume that a 4G RAT such as 3GPP Long-Term Evolution (LTE) is adopted by each of the cells in the network and use this as an example to illustrate the proposed method. Although only two types of cell, Macro or Micro, are shown in Fig. 1, various levels of cell are under consideration for 4G including so-called Femto and Pico cells. Femto and Pico cells can be overlaid on either Macro or Micro cells as explained below. Also, in LTE each base station (called eNB in LTE) generally is sectorized into N (N>= 1) partitions, each of which or any subset of which may constitute a cell. A typical example is for the base station to have three sectors, each of which is configured as a cell with frequency reuse factor being 1. Therefore, references to "cell" therefore include "sector" unless where the context demands otherwise.

A more complex heterogeneous network may consist of Femto, Pico, Micro and Macro base stations. Of these, the operator will have control over Pico, Micro and Macro Base stations. Femto base stations are expected to be installed by users, and consequently activation/deactivation thereof is not under control of the network operator. Figure 2 shows the operator-controlled cells in part of such a heterogeneous network.

The three biggest cells 10, 12 and 14 represent the Macro cells in the network, while the medium sized cells are Micro cells and the smallest cells are Pico cells. Within each Macro cell, Micro cells exemplified by 26 and 28 provide a first level of additional capacity. It should be noted that Micro cell 28 is at least partly within the coverage area of two Macro cells, 10 and 12. Within the Micro cells, in turn, there are Pico cells illustrated by the small circles and exemplified by 30 and 32. Pico cell 30 is an example of a Pico cell which is within the coverage area of a Micro cell 26, as well as within the coverage area of Macro cell 10. Pico cell 32 is an example of a Pico cell which is within the coverage area of a Macro cell only.

The network is designed such that the Macro cells provide blanket coverage while the smaller Micro and Pico cells are providing additional capacity. Within this layout, we can identify several types of cell relationships:-

- Pico cells within the coverage footprint of Micro cell(s)
- Pico cells within the coverage footprint of only Macro cell(s)
- Pico cells partially within the coverage footprints of both Micro and Macro cell(s)
- Micro cells within the coverage footprint of Macro cell(s).

Thus, in addition to the Macro cell to Micro cell relationship shown in Figure 1, where the Micro cells provide additional capacity to the basic coverage provided by the Macro cells, it is possible to define a Pico cell to Micro cell relationship, where the Pico cells provide additional capacity to that of the Micro cells which are already serving as capacity boosters, as well as a Pico cell to Macro cell relationship, where the Pico cells provide additional capacity to the basic coverage provided by the Macro cells.

The above relationships among different hierarchical levels of cell are expressed by referring to "basic coverage cells" and "additional capacity cells" in the claims and summary of the invention.

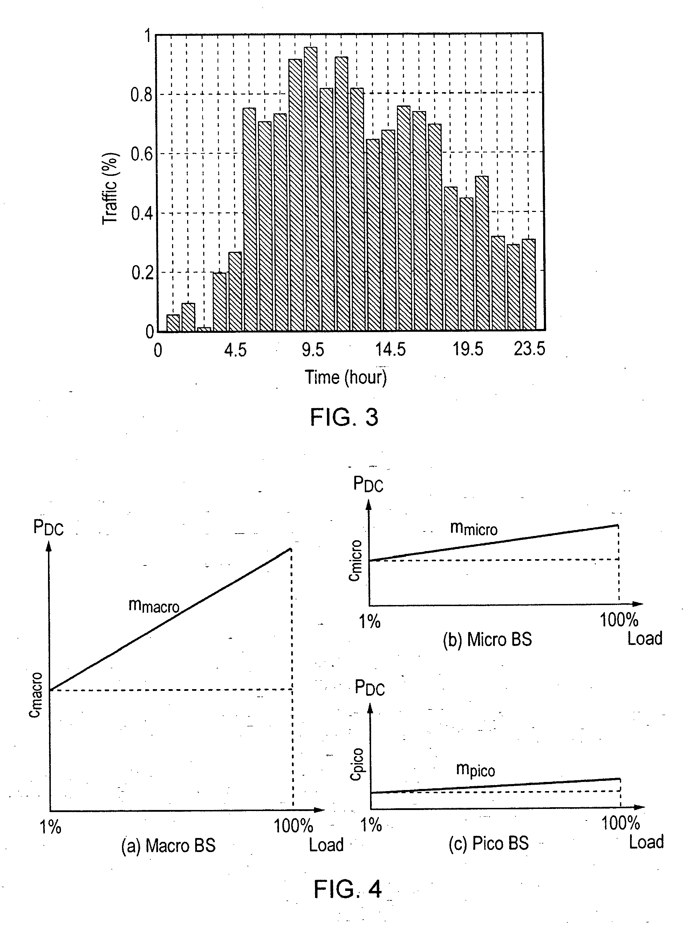

The demands of users in, for example, making voice calls, downloading files and so forth give rise to a traffic load in each geographical area of the network, and on each cell. At least some of these demands (voice calls for example) also require a certain Quality of Service (QoS). Imagining the deployment area in Figure 2 is a business district in a town, the temporal traffic load variation in 24 hours is exemplified by Figure 3.

In Figure 3, the horizontal axis represents time in units of hours through one day, based on local time in the area being considered. The vertical axis shows traffic load, which is normalized with respect to the load at the peak hour. There are various reasons for the variation of traffic load in a certain area; for example, the migration of users from the business district to residential districts or transportation lines, or the significant reduction in the number of active users from day time to night time. It is assumed that the Macro cells are always on (activated) in order to provide at least basic network coverage. However, with the general reduction in traffic load in a certain area, during some time periods the Micro or Pico cells can be deactivated and their traffic loads offloaded to the neighbouring Macro cells ("neighbouring" Macro cells being those within range of at least some users in a Micro or Pico cell).

As already mentioned, there is not necessary a one-to-one correspondence between base stations and cells. A base station may provide more than one cell, and in this case it is more correct to refer to deactivating a "cell" (by which is meant, deactivating the radio equipment such as a transmitter associated with that cell), rather than deactivating the base station. On the other hand, where a base station provides only one cell, then to deactivate the cell is equivalent to deactivating the base station.

At this purpose, potential solutions for energy saving are disclosed in 3GPP TR 36.927, V1.1.1, 2011-02.

From Figure 3, it can be seen that the capacity demand has significant variations over the day. There are time periods (up to 8 hours a day) where the capacity demand is less than 30% of the peak demand. This being so, it is desirable to switch OFF some of the smaller capacity providing cells during off-peak times to save energy. However the underlying problem is which of the smaller cells are to be selected for activation or de-activation during a given time period with a specific capacity demand. A robust algorithm is needed to select these cells, which optimizes the energy saving as well as provides a guaranteed level of QoS to users.

Summary of the Invention

According to a first aspect of the present invention, there is provided a method according to claim 1.

Preferably, the determinations are applied for a predetermined time period and wherein in step (i), determining the load includes estimating the expected load on each traffic region in a next time period. Here, a traffic region may be a region within one or more of the cells, in which the best wireless communication quality of users is with a given cell and in which said wireless communication quality is within a defined range, or in which a given cell is otherwise best suited to be the serving cell. Such a cell may be referred to as a "potential serving cell".

An example of a given cell being "otherwise best suited to be the serving cell" is in the case of load balancing, where a neighbour cell takes up users in a region (usually at the cell edge) to ease the load of an adjacent cell.

The method may further comprise determining the wireless communication quality of the traffic region with respect to each of the potential serving cells and neighbouring cells thereof, wherein in step (i) users are assigned to the cell providing the best wireless communication quality.

Step (i) may further comprise estimating the load on each cell as a percentage of wireless communication resources available in the cell, cells for which the load meets a predetermined threshold condition being designated as active in the next time period.

Also, step (ii) can include determining whether an basic coverage cell has resources available for users transferred from an additional capacity cell.

Step (ii) may take into account the power saving due to switching base station equipment related to an additional capacity cell to idle mode, and the power increase needed by base station equipment related to basic coverage cells to serve the users transferred from the additional capacity cell.

Moreover, step (ii) may distinguish between additional capacity cells wholly within a basic coverage cell, and additional capacity cells only partly overlapping with basic coverage cells.

Preferably, step (ii) includes compiling a list of additional capacity cells as candidates for switching to idle mode based on the estimated loads, cells in the list being ranked in order of least power and resource efficiency.

Preferably also, step (iii) comprises loading to a predetermined percentage of their available resources the additional capacity cells determined not to be switched to idle mode in step (ii), and thereafter reviewing said list taking into account the effect of said loading on the estimated loads of other cells.

In any method as defined above, the additional capacity cells may include Pico cells and the basic coverage cells may include Macro cells. The heterogeneous network may further include Micro cells which act as basic coverage cells of the Pico cells and as additional capacity cells of the Macro cells, the method further comprising performing steps (ii) and (iii) firstly with the Micro cells as the basic coverage cells of the Pico cells, and secondly with the Macro cells as basic coverage cells of the Micro cells.

In addition, the heterogeneous network may further include Femto cells in which case step (i) comprises subtracting, from the loads on individual traffic regions, traffic expected to be served by the Femto cells.

Here, "idle mode" corresponds to "switched OFF" and "deactivated" as mentioned elsewhere in this specification, and is a mode from which a cell may be reactivated at some later time. "Active" corresponds to "switched ON", in other words operative for the next time period.

In any method as defined above, preferably, the switching to idle mode of a cell remains valid for a fixed time interval, after which the method is repeated to permit reactivation of a deactivated additional capacity cell.

The methods defined above may be applied to a self-organizing network, SON, wherein the method is carried out by a SON server of the network.

Thus, according to a second aspect of the present invention, there is provided a SON server arranged to carry out any method as defined above.

Embodiments of the present invention provide an algorithm which considers the individual power consumption profiles for different types of base stations in a heterogeneous cellular network and determines which base stations or radio equipment of base stations can be switched to idle mode in line with the traffic demand. The algorithm optimizes the energy efficiency of the heterogeneous cellular network, enabling the activation of the minimum number of base stations to support the predicted traffic demand for a given time period.

Brief Description of the Drawings

Reference is made, by way of example only, to the accompanying drawings in which:

Figure 1 illustrates the principle of a heterogeneous network;

Figure 2 illustrates operator-controlled cells in a heterogeneous network having overlapping Macro, Micro, and Pico cells;

Figure 3 illustrates a temporal profile for wireless data traffic in a heterogeneous network;

Figure 4 shows linearized power models for three different kinds of base station, corresponding to Macro, Micro and Pico cells respectively;

Figure 5 is a flowchart of an algorithm employed in an embodiment of the present invention, as applied to Pico cells; and

Figure 6 is a flowchart of an algorithm employed in an embodiment of the present invention, as applied to Micro cells.

Detailed Description

Referring again to Figures 1 and 2, the general principle for cellular network design is that the Macro cells will provide blanket coverage to the network's operating region, while the Micro and Pico cells are installed by the operator to provide capacity to targeted hotspots. Hence we assume that the Macro cells will be always operating (in the ON state) and the smaller Micro and Pico cells can be turned ON or OFF depending on the capacity demand.

Turning cells ON and OFF in this way will necessitate handovers of users between the current serving cell, which is determined to be turned OFF, and a compensation cell. Techniques for such handovers in, for example, an LTE-based wireless communication system are well known and will not be described here. However, it is noted for the purposes of the subsequent description that conventional handover in LTE involves a reporting event A3, i.e. triggering the UE to send a Measurement Report when a neighbouring cell becomes better than the serving cell by a specific offset.

Embodiments of the present invention take into account the individual power consumption profiles of Pico, Micro and Macro cells and determine which of the Micro and Pico cells can be switched OFF as an energy saving measure. There are distinct general features for the power consumption profiles for the above classes of cells. In one embodiment, the present invention makes use of the linearized general power models as proposed by the EARTH (Energy Aware Radio and neTwork tecHnologies) project.

Figure 4 illustrates the distinct features of power models for the general Pico, Micro and Macro Base stations, according to results published by the EARTH project.

In Figure 4, (a) (b) and (c) show a linearized power model for each of a Macro BS, Micro BS and Pico BS respectively in the form of power consumption as a function of load. The terms $C_{BStype}$ indicate the overhead power consumption within the BS type at virtually no load condition, while the terms $m_{BStype}$ indicate gradient of the lines or the power increment per unit load increase. $P_{DC}$ is the total power utilized by all the units (RF unit, Baseband unit, cooling unit etc) of the Base station. In effect this is the total DC power consumption for the base station.

As expected the Macro BS stations consume much more power than a smaller Pico BS, while the Micro BS power consumption is moderate. This indicates that by switching OFF (that is, switching to idle mode) a Pico BS, very little power can be saved, but by switching OFF a Micro BS, significantly more power can be saved. Also of importance are the relative gradients of the 3 lines. The Pico BS gradient is the flattest, while the Macro BS gradient being the steepest. This indicates that if the load (or active users) can be transferred from a Macro/Micro BS to a Pico BS or from a Macro BS to a Micro BS, significant energy savings can be made.

An embodiment of the present invention will now be described in the form of an algorithm intended to be implemented, for example, by the SON server of a Self-Organising Network (SON).

References below to "the network" could in principle be the entire network under control of the SON server, but more typically will be a subset of the whole network. Of course, it would be possible for the SON server to apply the algorithm to multiple investigation areas in turn, so as to cover the whole network over time.

For simplicity, it will be assumed that each cell has its own BS. As already mentioned, however, this is not necessarily the case in practice. Consequently, references to "deactivating"/"switching off" a BS include setting to idle mode only that part of a BS's radio equipment which is responsible for providing a specific cell. References to a "user" below implies a user's terminal (UE) where necessary.

The algorithm preferably employs the $C_{BStype}$ and $m_{BStype}$ for each of the BSs (cells) in the network as well as the sleep mode power consumptions ($P_{sleep}$) for Micro and Pico Base stations. It also preferably uses accurate load predictions for the next time period. The algorithm determines which of the BSs need to be ON to match the load condition expected in that period. The load predictions have to be spatially accurate as well, to the level of predicting the load within the small footprint of a Pico BS.

Future heterogeneous networks may also include a potentially large number of user operated Femto cells. These Femto cells can be a closed user group as well as open user group indicating that external users can also login to the Femto cells and use their service. Thus, one embodiment of the present invention takes into account how many Femto cells are likely to come into operation within the Micro/ Macro cell footprint and how much capacity this will off-load from the user operated BS types.

In the embodiment described below, the algorithm operates on distinct time periods (typically 15-30 minutes long) and is repeated at the end of each time period. This "time period" is configurable. It can be scaled from minutes to hours. However, a shorter time period can cause signalling burden to the network, and currently (in LTE) the network can support 15 mins as the time interval for reporting traffic load for the load balancing purposes.

In another embodiment, when the traffic load (or predicted traffic load) in a given area or cell meets a given threshold condition, for example is lower than a predefined threshold, the SON server triggers the analyzing process. Here, the threshold could be variable, for example it can be configured by operators or calculated by some algorithm. The threshold may vary from one region or occasion to another, such as different values for different hot spot zones within the network.

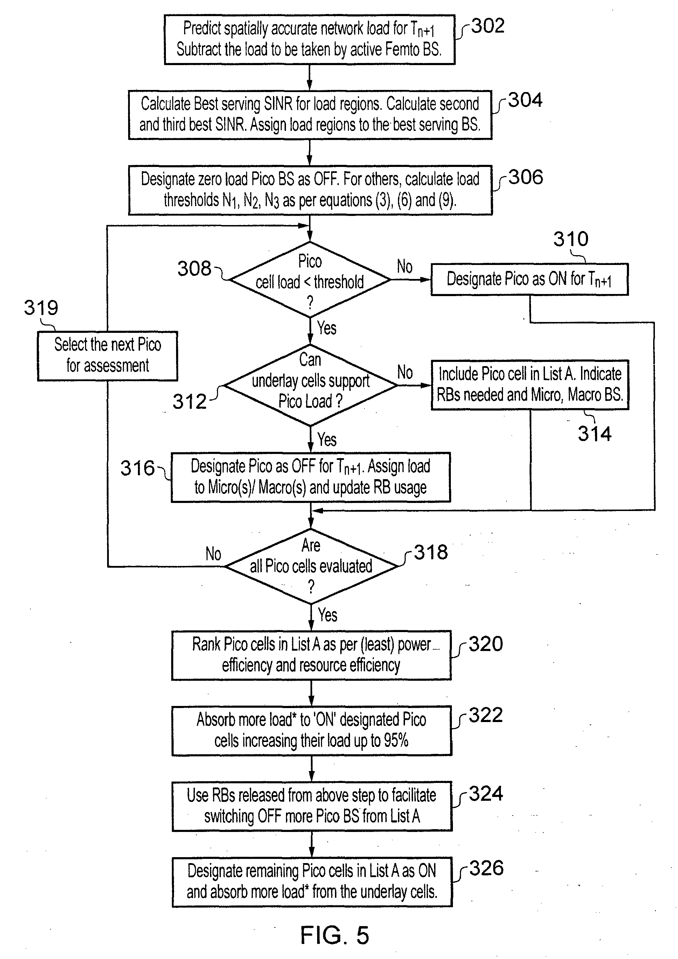

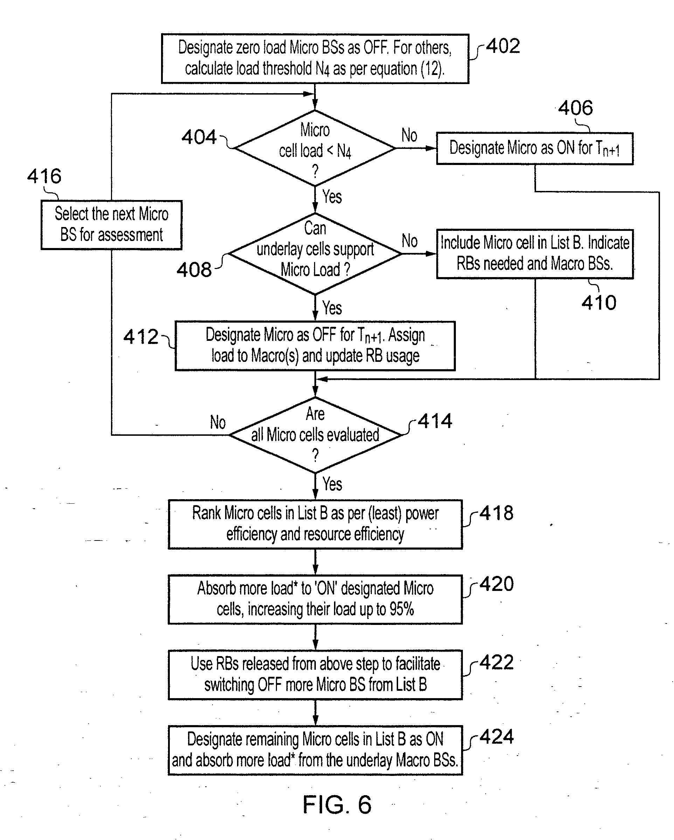

In the embodiment to be described, the Pico cells are considered first according to an algorithm set out in the flowchart of Figure 5. After that, the Micro cells are considered according to a similar algorithm shown in the flowchart of Figure 6. However, this sequence is not essential.

Stage 1: Predicting Traffic Loads

Referring to Figure 5, step 302, the first stage is to estimate traffic demand for the next time period $T_{n+1}$. This should be temporally and spatially accurate to the level of the smallest cell (Pico cell) foot print areas. The traffic is estimated for each cell regardless of its size.

The particular method used for estimating traffic is not essential to the invention. One possibility is to use the collected cell load information together with some existing traffic prediction method at the SON server to generate a traffic distribution map for the investigation area. Thereafter, the predicted traffic distribution map is used to estimate the traffic load on each of the cells in the investigation area.

Another possibility is to obtain cell load information of different time periods from a database of the network operator's stored historical information, thus the predicted cell load of the next time period used to trigger the analyzing process is read from the database. This technique can be employed when the algorithm is applied to diagnosing the network's potential for energy saving using historical data provided by the operator. Alternatively, there are existing prediction methods such as the Holt-Winters method that can be used to predict the next time period's traffic load based on previously measured traffic loads.

The traffic demand is measured in terms of the required total data rate (Mbps) for that cell during that specified time period (more realistically, it will be an average as the total demand will vary over the time period). This demand is converted to the % load of a cell depending on the SINR distribution of the cell, because users with higher SINR require less resources (or load) from the BS to meet their data rates.

Preferably, this step also estimates how many Femto cells are likely to be active within a Macro or Micro coverage area. The traffic demand that will be taken up by Femto cells within those larger cell footprints is subtracted.

Stage 2: Assessing SINR levels to traffic regions

It is possible to define long term SINR (or more precisely SINR bands) for a region (usually in the form of concentric rings) of a cell. This SINR band is smaller than a cell size (even Pico cells). Fast-fading effects can be ignored, hence it is long term, average SINR which is of interest here.

Step 304 in Figure 5 considers a number of "traffic regions" within cells, which for example are areas where a given SINR band will hold, and estimates (long term) SINR levels which can be provided to the traffic regions by the different types of Base Stations in the region. More generally, a traffic region may be a region within one or more of the cells, in which the best wireless communication quality of users is with a given cell and in which said wireless communication quality is within a defined range, or in which a given cell is otherwise best suited to be the serving cell, such as for load balancing reasons, where a neighbour cell takes up users in a region (usually at the cell edge) to ease the load of an adjacent cell.

It is assumed that all BSs are ON when estimating SINR with the nearest BS as the serving cell, as this will give the worst case SINR with high interference. Then a second and possibly third set of SINR are evaluated, with all the cells ON and the traffic connected to the basic coverage cells (usually Macro cells, but also possibly Micro cells). The SINR from all BS are listed in decreasing order and should be above a certain threshold. The SINR from all BS means the SINR for a specific traffic region from all the BSs nearby. This can be the underlay Macro or Micro cell, and the overlay Pico or Micro cell and any other nearby cell which provides acceptable (above a threshold) SINR to this region. In this embodiment, the best SINR is used as the criterion to determine the best serving cell to the region concerned.

Stage 3: Assigning Traffic to Cells

The next stage (Figure 5, step 304) is to assign the predicted traffic to the serving BS with best SINR, and estimate the number of Resource Blocks (RBs) needed to support the traffic in each cell as a percentage of full load RB count for each BS site with this assignment. This is the initial predicted load for each cell.

Stages 1 to 3 (steps 302 and 304) are performed in common for both Pico and Micro cells (or more generally, for each class of additional capacity cell under operator control), but consideration now turns specifically to the Pico cells in this embodiment.

Stage 4: Considering Pico Cells for Deactivation

Referring now to Figure 5, step 306, all Pico BS in the network are now considered.

(i) All the Pico BS with no load predicted for $T_{n+1}$ time period are designated as OFF for that period.

(ii) For other Pico cells, within the footprint of Micro cell(s), a threshold load $N_1$ is calculated for individual combinations of Pico/Micro cells as defined below.

The power saving by deactivating a Pico cell (i.e. switching to "sleep" or "idle" mode), is expressed as: - -

$$Ps = c_{pico} + m_{pico} \cdot N_1 - P_{sl\_pico} \qquad (1)$$

The concomitant power consumption increase for the Micro cell(s) is given by:

$$Pc = m_{micro} \cdot (N_1 + \Delta) \qquad (2)$$

For power saving, $Pc \leq Ps$, i.e.:

$$N_1 \leq \frac{c_{pico} - P_{sl\_pico} - m_{micro} \cdot \Delta}{m_{micro} - m_{pico}} \qquad (3)$$

The term $\Delta$ is the difference in Resource Blocks needed by the Micro BS(s) to support this load, as these are not the best serving cell(s). The SINR should be re-calculated with the Pico-cell OFF, which reduces interference. In most cases, this SINR would be lower than best serving SINR, making $\Delta$ a positive value. But if this second SINR becomes better than best serving SINR, $\Delta$ should be taken as a negative value.

Considering now each specific Pico cell in turn, Step 308 compares the calculated load with a threshold condition. If the Pico BS does not meet (e.g. is at or above the threshold load), (step 308, "NO"), then it is marked as active in the next period (step 310). Otherwise, i.e. if the Pico BS meets the $N_1$% load condition, it is marked as a candidate for switch OFF (step 308, "YES").

Next, (step 312) it is checked whether the underlay cells, in this case Micro cells, can support the load previously assigned to the Pico cells marked as candidates for deactivation. If the supporting Micro cell(s) have enough free RBs to provide the $(N_1 + \Delta)$ RBs required (step 312, "YES"), the next step 316 designates the Pico BSs as switched OFF for $T_{n+1}$. In addition, step 316 updates the RB usage for the underlay Micro cell(s).

In step 312, if the RBs are not adequate (in other words if the Micro BS cannot handle the additional traffic) (step 312, "NO"), the algorithm proceeds to a step 314 of listing these Pico BSs in a "List A", as potential BSs which can be switched OFF subject to RBs being found. Step 314 includes the RBs required and the related underlay Micro cell(s) in the list.

There is a possibility of Pico cells continuously switching ON and OFF in consecutive time periods (ping-pong effect). To avoid this, a certain hysteresis load $L_{hys}$ is preferably included into $N_1$. That is, if a Pico base station was ON for time period $T_n$, its load needs to drop below $(N_1 - L_{hys})$ for it to be switched OFF in $T_{n+1}$. If the Pico Base station was OFF in $T_n$, the load will need to exceed $(N_1 + L_{hys})$ for it to be turned ON in $T_{n+1}$.

(iii) So far only the threshold condition $N_1$, relating to Pico and Micro cells, was considered. Referring back to step 306, for Pico cells within the footprint of only Macro cell(s), the general trends of the power models make them unlikely to be candidates for switch OFF and offload to Macro BS(s). However individual profiles will vary, and the following check should be carried out to each of the Pico/Macro combinations:-

$$Ps = c_{pico} + m_{pico} \cdot N_2 - P_{sl\_pico} \qquad (4)$$

$$Pc = m_{macro} \cdot (N_2 + \Delta^*) \qquad (5)$$

For power saving, $Pc \leq Ps$, i.e.:

$$N_2 \leq \frac{c_{pico} - P_{sl\_pico} - m_{macro}\Delta^*}{m_{macro} - m_{pico}} \qquad (6)$$

To consider such cells, the algorithm repeats a similar process as already mentioned, this time using $N_2$ as the threshold condition. Referring now to step 308 in Figure 5, if the Pico BS does not meet (e.g. is at or above the threshold load), (step 308, "NO"), then it is marked as active in the next period (step 310). Otherwise, i.e. if the Pico BS meets the $N_2$% load condition, it is suited for switch OFF (step 308, "YES"), but only if the underlay Macro BS can provide the necessary RBs (($N_2+\Delta^*$)%) to support the load (step 312, "YES"). Here again, the term $\Delta$ should be calculated based on the SINR estimate with the underlay Macro as the serving cell and with Pico cell switched OFF. Update the RB usage for the underlay Macro cell(s). If the underlay Macros cannot yet support the load (step 312, "NO"), these Pico BSs are added to List A, as potential Pico BSs which can be switched OFF (step 314).

Step 314 includes the RBs required and the related underlay Macro cell(s) in the list. Again, it is preferable to consider the load hysteresis $L_{hys}$ (as before in eqn(3)) with the load level $N_2$, to avoid repeated ON/OFF of Pico base stations.

(iv) Referring back to step 306, for Pico BSs, which are partially within coverage of both Micro and Macro cells, it is necessary to consider the percentage increase in load required by both the Micro cell(s) and Macro cell(s) to support this load. A threshold load $N_3$ is calculated for the Pico cell, below which the switching OFF will yield energy savings. The total load for both Macro and Micro cells is assumed to be ($N_3+\Delta^1$), with a fraction $p_1$ of this needed by the Macro cells and (1-$p_1$) needed by the Micro cells. Here, the fraction $p_1$ depends on what % of the region is covered by Macro and Micro cells and what are the average SINR levels provided by these cells. These two factors will determine how many RBs (i.e. cell load) are required to satisfy the demand.

$$Ps = c_{pico} + m_{pico}.N_3 - P_{sl\_pico} \qquad (7)$$

$$Pc = m_{macro}.p_1.(N_3 + \Delta^1) + m_{micro}.(1 - p_1).(N_3 + \Delta') \qquad (8)$$

For power saving, Pc $\leq$ Ps, i.e.;

$$N_3 \leq \frac{c_{pico} - P_{sl\_pico} - p_1.m_{macro}.\Delta^1 - (1 - p_1)m_{micro}.\Delta^1}{p_1.m_{macro} + (1 - p_1)m_{micro} - m_{pico}} \qquad (9)$$

If the Pico BS concerned is below the $N_3$% load, it is a candidate for switch OFF. If the underlay Macro and Micro cells can provide the required ($N_3+\Delta^1$) % to support this load, the Pico cell is designated as OFF for the $T_{n+1}$ time period. The RB usage in the underlay Macro and Micro cells is updated, and if the underlay cells cannot yet support the $N_3$% load, the Pico BS is added to List A, with the RBs required from the related Macro and Micro cells. It is preferable to consider the load hysteresis $L_{hys}$ (as before in eqn(3)) with the load level $N_3$, to avoid repeated ON/OFF of Pico base stations.

In step 318 it is checked whether all Pico cells have been evaluated, and if not (step 318, "NO"), flow proceeds to step 319 to select the next Pico cell to be considered.

Once all the Pico cells have been assessed, step 320 ranks the Pico cells in List A in accordance with (least) power efficiency and resource efficiency. One way to assess these criteria is as follows.

a. Power efficiency criterion

i. The power saving gain of a Pico cell n is calculated as:

$$p_s(n) = p_{consumption}(L(t), n) - p_{idle}(n)$$

(1)

where $L(t)$ represents the traffic load at time t, $p_{consumption}(L(t), n)$ represents the power consumption of cell n with traffic load $L(t)$, $p_{idle}(n)$ is the power consumption of cell n at idle mode.

ii. The power efficiency ranking coefiicient $P_{rank}(n)$ is calculated as:

$$P_{rank}(n) = p_s(n) / \sum_{i=1}^{N} p_s(i)$$

(2)

where N represents the total number of candidate Pico cells.

b. Resource efficiency criterion

i. The resource efficiency criterion is based on determining how many resource blocks (RBs) of the underlay cells are required to fulfil the capacity demand of a Pico cell, which is a candidate for switching off. In some cases, the coverage to compensate for switching off a Pico cell would be provided by multiple underlay cells, with each cell covering a specific region. Here, "region" may refer for example to part of a Pico cell's coverage area, and which can be compensated by a specific compensation cell (or sector thereof). In such cases the capacity demand for each region should be predicted. The Holt-Winters method, for example, can be used to predict the capacity demand for each region (or the entire sector) of the Pico cell. This method relies on historic data of capacity demand for prediction and it is able to adapt to the time of day variations and upward or downward trends in capacity demand.

The ranked list shows the cells in order of priority for switching OFF in the next time period. In other words, the Pico BS at the top end of the list should be given priority for switch OFF, if the resources become available in the next step.

Pico BS, which were not assigned as OFF or which are not in List A, will have been designated as ON for time period $T_{n+1}$ (step 310). Such cells are considered in step 322. If the load for such a Pico cell is below 95%, step 322 considers if it can provide services to traffic already assigned to underlay Micro or Macro cell(s), by looking at second or third best SINR. In practice, it is preferable to connect the active users from their best serving cell to another cell (Pico cell) which is providing a lower SINR. For this a 'forced' handover should be executed. This handover should be facilitated by setting a negative offset in the handover measurement A3, mentioned above. This negative offset should reflect how far below the best SINR is an acceptable SINR as would be determined by the QoS requirements. Thus, for users initially connected to the underlay Micro or Macro cells (for the concerned Pico cells), this negative offset handover measurement should be ordered, and this would facilitate the 'forced' handover.

Step 322 offloads as much traffic as possible from Macro and Micro cells in this manner, filling up the load on Pico cells designated to be "ON" up to 95%. The new RB usage in each of the cells is recorded.

Then (step 324), the algorithm considers Pico BSs in List A from the top and examines if the freed up resources in Micro and Macro cells can now switch OFF these Pico BSs. If Pico BSs can be designated as OFF for $T_{n+1}$, the RB usage is updated for the underlying cells. Those Pico BSs which do not succeed in being switched OFF in this manner are marked as "ON" in the next time period (step 326). However, it can be checked whether these Pico cells can absorb more load from the underlay cells. Having described the algorithm as applied to Pico cells, its application to Micro cells will now be described with respect to Figure 6. It is assumed that steps 302 and 304 of Figure 5 have been performed. The procedure is closely analogous with that already described for the Pico cells.

Stage 5: Considering Micro Cells for Deactivation

In this instance, the Micro cells in the network are now regarded as the additional capacity cells, which are covered by an underlay of Macro cells as basic coverage cells.

In step 402, all the Micro cells with no load predicted for $T_{n+1}$ time period are designated as OFF. A load threshold $N_4$ for each Micro BS is calculated, below which the Micro cell is a candidate to be switched OFF and yield some power saving.

The power saving by switching OFF a Micro cell is given in this case by:

$$Ps = c_{micro} + m_{micro} \cdot N_4 - P_{sl\_micro} \qquad (10)$$

and the power consumption increase for the Macro cell(s) by:

$$Pc = m_{macro} \cdot (N_4 + \Delta_4) \qquad (11)$$

For power saving, $Pc \le Ps$, i.e.:

$$N_4 \le \frac{c_{micro} - P_{sl\_micro} - m_{macro} \cdot \Delta_4}{m_{macro} - m_{micro}} \qquad (12)$$

Considering now each specific Micro cell in turn, in step 404, it is checked whether the Micro BS has a load below $N_4\%$. If not (404, "NO") then the Micro BS is designated as ON for the next time period in step 406. If so (404, "YES") it is suited for switch OFF. Then, (step 408) it is checked whether the underlying Macro cell(s) could provide the $(N_4+\Delta_4)$ RBs required for taking up this load. The required RBs $(N_4+\Delta_4)$ should be calculated by considering the SINR with underlay Macro cell as the serving cell and the Micro cell assumed to be switched OFF. If the load can be supported (408, "YES"), then step 412 designates these Micro BSs as OFF for time period $T_{n+1}$.

On the other hand, if the load cannot yet be supported (step 408, "NO"), the Micro BS concerned is added to a list B (step 410), with RBs required and the related Macro BSs for switch OFF. To avoid repeated ON/OFF of Micro base stations, it is preferable to consider a load hysteresis $L_{hys}$ with the load value $N_4$.

Following step 406, 410 or 412 it is checked in step 414 whether there remain Micro cells yet to be considered and if so (414, "YES") the process returns to step 404; otherwise it proceeds to step 418.

Step 418 ranks the Micro BSs in List B on the basis of the (least) power efficiency and resource efficiency criterion, in the same manner as described for the Pico cells. The Micro BS at the top end of the list should be given priority for switch OFF, if the resources become available in the next step.

As already mentioned with respect to step 406, the Micro cells which do not fall into the above groups should be designated as ON for time period $T_{n+1}$. Such cells are considered in step 420. If the load is below 95% on any of the corresponding Micro BS, step 420 seeks to absorb more load from the underlay Macro cell layer by considering second best SINR to the load regions. In practice, for users initially connected to the Macro cells and who show an acceptable second or third best SINR to these Micro cells, the A3 Handover measurement offset should be set to a negative value. This will enforce Handovers from the Macro cell(s) to the concerned Micro cells, which frees up resources in the Macro cell layer, by taking up load up to 95% of Micro cell capacity. The load conditions for the relevant Micro and Macro BSs are updated.

Step 422 considers the Micro BS in List B from the top and examines whether the freed-up resources in the Macro cells can now switch OFF these Micro BSs. If Micro BSs can be designated as OFF for $T_{n+1}$, the RB usage is updated for the underlying cells.

Those Micro BSs which do not succeed in being switched OFF in this manner are marked as "ON" in the next time period, and it is checked in step 424 whether these can absorb any more load from the underlay cells (in this case Macro cells).

Stage 6 : Deactivating Cells

The algorithm having been carried out, the SON server now takes action to implement its findings in the heterogeneous network.

The final ON/OFF status for each BS and the predicted load it will support is tabulated in the SON server. The SON server communicates with each BS node and notifies the BS of its ON/OFF status and possible load for the time period $T_{n+1}$.

By repeating the process after a fixed time interval, or in response to a new trigger, it is possible for cells to be reactivated again. After each time interval, the investigation area's traffic distribution is re-evaluated. As already mentioned, the SON server may generate a traffic map for the investigation area, using which the cell load of all Macro and Micro cells can be predicted (even if some Micro cells may be "OFF", the prediction can be based on their coverage footprint information). Based on the predicted cell load information, the candidate Micro cells for the ranking algorithm can be worked out; if a Micro cell is put in an "OFF" cell list, then it will be deactivated in the next time period, checking its current status, if it is already "OFF", then its status will remain "OFF", otherwise its status needs to be updated; if a Micro cell is not in the "Off" cell list, that means it will be "ON" during the next time period, and again its current status needs to be checked to see whether its status requires an update or not.

The phrase "absorb more load to ON designated cells" in steps 322 and 420 refers to assigning traffic regions from the best serving underlay cells to these ON selected cells by considering the second and third best SINR for load regions. These assignments help to free up more resources from the underlay cells and allow these resources to be used in switching OFF further Pico or Micro cells. Due to the steeper gradients in bigger cells (Fig. 4), it is always beneficial to transfer load from the bigger cells to smaller cells which are designated to be ON.

Although the above embodiment describes the complete algorithm for switching OFF cells when all cell types (Femto, Pico, Micro and Macro) are involved, it can easily be adapted to networks with only a few of these cell types available. For example, if a network consists of only Macro, Micro and Femto cells, the modified algorithm will contain the first 2 steps of Figure 5 and then Figure 6. As another example, it is not necessary for Femto cells to be present in the network. Indeed, Femto cell operation is not under control of the network operator.

As already mentioned, the algorithm is intended to be executed by a centralised entity (for example a SON server), so there will be a lot of signalling between this entity and the base stations. For example, the base stations will have to report predicted load levels for the next time interval and report back to the central entity. The central entity should run this algorithm and inform top each BS whether it will be switched ON or OFF for the next time interval. Also, if the load level of a smaller cell needs to be increased, active users connected to a Macro cell will need to hand over to a smaller cell with lower SINR. For this the central entity will have to signal to the Macro BS to initiate user measurements A3 with a negative offset. These are the types of basic signalling involved with this algorithm, which may need to be standardized.

Various modifications are possible within the scope of the present invention.

Reference has been made above to "Macro" and "Micro" cells, but embodiments of the present invention can be applied to heterogeneous networks having any kinds of cell including Pico, Femto and so on, and to any number of classes of cell.

There may, for example, be heterogeneous networks made up of only Micro cells and an overlay of Pico cells, where the Micro cells provide basic coverage whilst the Pico cells are provided to boost capacity. There may also be heterogeneous networks where a region is partly covered by Macro cells and partly by Micro cells providing coverage underlay, with Pico cells overlaid as capacity boosters. The present invention can be applied to all such types of heterogeneous network with minor modifications.

In the above embodiment, Pico cells were considered first for deactivation, followed by Micro cells. However, it is not necessarily essential to consider the cells in this order, or even to perform the algorithm for both types of cell. Although the greatest power savings will be obtained by treating each additional capacity cell class in turn, some power savings can be achieved by considering Pico or Micro cells alone.

The embodiment described above does not consider the case where Macro cells are deactivated during low traffic periods, because it is assumed that the basic coverage of the network is provided by all of the Macro cells, with the Micro cells used in certain areas for capacity boosting purposes. If under some circumstances where operators wished to use lots of Micro cells to provide the basic coverage, and Macro cells to meet the additional capacity requirement, then it would be possible to use the ranking algorithm of the invention to decide the priority of deactivating Macro cells.

The above-mentioned embodiment assumes that all the cells are 4G (e.g. LTE). It is not necessary, however, for the Macro and Micro cells to use the same RAT. The RAT for each of them could be any kind, for example, 3G or 4G. However the proposed algorithm is intended to be used for a planned network in which all cells are under supervision of a common supervising entity such as a SON server.

In the above embodiment, a number of "traffic regions" were defined within cells as areas within which a given SINR band will hold. However, this is not the only possible way to define the traffic regions. In general, a traffic region is a region in which a given cell is in some way best suited to be the serving cell having regard to present or future conditions.

To summarise, embodiments of the present invention may provide an algorithm which considers the individual power consumption profiles for different types of base stations in a heterogeneous cellular network and determines which base stations can be switched OFF in line with the traffic demand. The algorithm optimizes the energy efficiency of the heterogeneous cellular network, enabling the activation of the minimum number of base stations to support the predicted traffic demand for a given time period.

Industrial Applicability

The main benefit of the this invention is that it allows to limit the number of active base stations to match the load experienced by the network, enabling significant energy savings for the operator. This will drive down the operational costs for the network operator and also fulfil the social responsibility of cutting down the $CO_2$ emissions.

**Claims**

1.  A method of managing a heterogeneous network having overlapping additional capacity cells (26; 28; 30; 32) and basic coverage cells (10; 12; 14) for serving wireless communication traffic of users, at least the additional capacity cells (26; 28; 30; 32) having an active mode and an idle mode, the method comprising:

    (i) with users assigned to specific ones of said cells, determining loads on individual traffic regions of the cells, and power consumption due to base station equipment related to those cells;
    (ii) based on consideration of the loads and the power consumption determined in step (i) for the additional capacity cells (26; 28; 30; 32) and the basic coverage cells (10; 12; 14) determining that an additional capacity cell (26; 28; 30; 32) is to be switched to idle mode if $P_c \leq P_s$, wherein $P_c$ is the power consumption increase caused by transferring users from an additional capacity cell (26; 28; 30; 32) to one or more basic coverage cells (10; 12; 14), and and $P_s$ is the power saving achieved by switching the additional capacity cell (26; 28; 30; 32) to idle mode;
    (iii) for additional capacity cells (26; 28; 30; 32) determined not to be switched to idle mode in step (ii), determining whether power can be saved by transferring users from a basic coverage cell (10; 12; 14) or from another additional capacity cell (26; 28; 30; 32) to such additional capacity cells (26; 28; 30; 32).

2.  The method according to claim 1 wherein the determinations are applied for a predetermined time period and wherein in step (i), determining the load includes estimating the expected load on each traffic region in a next time period.

3.  The method according to claim 2 wherein a traffic region is a region within one or more of the cells, in which the best wireless communication quality of users is with a given cell and in which said wireless communication quality is within a defined range, or in which a given cell is otherwise best suited to be the serving cell.

4.  The method according to claim 3 further comprising determining the wireless communication quality of the traffic region with respect to one or more potential serving cells and neighbouring cells, wherein in step (i) users are assigned to the cell providing the best wireless communication quality.

5.  The method according to claim 4 wherein step (i) further comprises estimating the load on each cell as a percentage of wireless communication resources available in the cell, cells for which the load meets a predetermined threshold condition being designated as active in the next time period.

6.  The method according to claim 5 wherein step (ii) includes determining whether an basic coverage cell has resources available for users transferred from an additional capacity cell.

7.  The method according to claim 5 wherein step (ii) takes into account the power saving due to switching base station equipment related to an additional capacity cell to idle mode, and the power increase needed by base station equipment related to basic coverage cells to serve the users transferred from the additional capacity cell.

8.  The method according to claim 5 wherein step (ii) distinguishes between additional capacity cells wholly within a basic coverage cell, and additional capacity cells only partly overlapping with basic coverage cells.

9.  The method according to claim 5 wherein step (ii) includes compiling a list of additional capacity cells as candidates for switching to idle mode based on the estimated loads, cells in the list being ranked in order of least power and resource efficiency.

10. The method according to claim 9 wherein step (iii) comprises loading to a predetermined percentage of their available resources the additional capacity cells determined not to be switched to idle mode in step (ii), and thereafter reviewing said list taking into account the effect of said loading on the estimated loads of other cells.

**11.** The method according to any preceding claim wherein the additional capacity cells include Pico cells and the basic coverage cells include Macro cells.

**12.** The method according to claim 11 wherein the heterogeneous network further includes Micro cells which act as basic coverage cells of the Pico cells and as additional capacity cells of the Macro cells, the method further comprising performing steps (ii) and (iii) firstly with the Micro cells as the basic coverage cells of the Pico cells, and secondly with the Macro cells as basic coverage cells of the Micro cells.

**13.** The method according to claim 11 or 12 wherein the heterogeneous network further includes Femto cells and step (i) comprises subtracting, from the loads on individual traffic regions, traffic expected to be served by the Femto cells.

**14.** A SON server arranged to carry out the method of any preceding claim.

**Patentansprüche**

**1.** Verfahren zur Verwaltung eines heterogenen Netzes mit überlappenden Zellen mit zusätzlicher Kapazität (26; 28; 30; 32) und Grundversorgungszellen (10; 12; 14) zum Abwickeln von drahtlosem Kommunikationsverkehr von Benutzern, wobei wenigstens die Zellen mit zusätzlicher Kapazität (26; 28; 30; 32) einen aktiven Modus und einen Ruhemodus aufweisen, wobei das Verfahren umfasst:

(i) Bestimmen bei Benutzern, die spezifischen der Zellen zugeordnet sind, von Lasten von individuellen Verkehrsregionen der Zellen und Leistungsverbrauch infolge von Basisstationseinrichtungen in Bezug auf diese Zellen;
(ii) Bestimmen basierend auf der Berücksichtigung der Lasten und des Leistungsverbrauchs, die in Schritt (i) für die Zellen mit zusätzlicher Kapazität (26; 28; 30; 32) und die Grundversorgungszellen (10; 12; 14) bestimmt werden, dass eine Zelle mit zusätzlicher Kapazität (26; 28; 30; 32) in den Ruhemodus zu schalten ist, wenn $P_c \leq P_s$, wobei $P_c$ die Leistungsverbrauchszunahme ist, die durch Weiterschalten von Benutzern von einer Zelle mit zusätzlicher Kapazität (26; 28; 30; 32) zu einer oder mehreren Grundversorgungszellen (10; 12; 14) verursacht wird, und $P_s$ die Leistungseinsparung ist, die durch Schalten der Zelle mit zusätzlicher Kapazität (26; 28; 30; 32) in den Ruhemodus erreicht wird;
(iii) Bestimmen für Zellen mit zusätzlicher Kapazität (26; 28; 30; 32), für die in Schritt (ii) bestimmt wird, dass sie nicht in den Ruhemodus geschaltet werden, ob Leistung durch Weiterschalten von Benutzern von einer Grundversorgungszelle (10; 12; 14) oder von einer anderen Zelle mit zusätzlicher Kapazität (26; 28; 30; 32) zu solchen Zellen mit zusätzlicher Kapazität (26; 28; 30; 32) eingespart werden kann.

**2.** Verfahren nach Anspruch 1, wobei die Bestimmungen für einen vorbestimmten Zeitraum angewendet werden, und wobei in Schritt (i) das Bestimmen der Last ein Schätzen der erwarteten Last in jeder Verkehrsregion in einem nächsten Zeitraum umfasst.

**3.** Verfahren nach Anspruch 2, wobei eine Verkehrsregion eine Region innerhalb einer oder mehrerer der Zellen ist, in welcher die beste Drahtloskommunikationsqualität von Benutzern bei einer bestimmten Zelle ist, und in welcher die Drahtloskommunikationsqualität innerhalb eines definierten Bereichs ist, oder in welcher eine bestimmte Zelle anderweitig am besten dazu geeignet ist, die versorgende Zelle zu sein.

**4.** Verfahren nach Anspruch 3, ferner umfassend ein Bestimmen der Drahtloskommunikationsqualität der Verkehrsregion in Bezug auf eine oder mehrere potenzielle versorgende Zellen und Nachbarzellen, wobei in Schritt (i) Benutzer der Zelle zugeordnet werden, welche die beste Drahtloskommunikationsqualität bereitstellt.

**5.** Verfahren nach Anspruch 4, wobei Schritt (i) ferner ein Schätzen der Last in jeder Zelle als einen Prozentsatz von in der Zelle verfügbaren Drahtloskommunikationsbetriebsmitteln umfasst, wobei Zellen, für welche die Last eine vorbestimmte Schwellenbedingung erfüllt, im nächsten Zeitraum als aktiv gekennzeichnet werden.

**6.** Verfahren nach Anspruch 5, wobei Schritt (ii) ein Bestimmen umfasst, ob eine Grundversorgungszelle Betriebsmittel aufweist, die für Benutzer verfügbar sind, die von einer Zelle mit zusätzlicher Kapazität weitergeschaltet werden.

**7.** Verfahren nach Anspruch 5, wobei Schritt (ii) die Leistungseinsparung infolge des Schaltens von Basisstationseinrichtungen in Bezug auf eine Zelle mit zusätzlicher Kapazität in den Ruhemodus und die Leistungserhöhung berücksichtigt, die durch die Basisstationseinrichtungen in Bezug auf Grundversorgungszellen zum Versorgen der von der Zelle mit zusätzlicher Kapazität weitergeschalteten Benutzer benötigt wird.

8. Verfahren nach Anspruch 5, wobei Schritt (ii) zwischen Zellen mit zusätzlicher Kapazität, die zur Gänze innerhalb einer Grundversorgungszelle sind, und Zellen mit zusätzlicher Kapazität unterscheidet, welche die Grundversorgungszellen nur teilweise überlappen.

9. Verfahren nach Anspruch 5, wobei Schritt (ii) ein Zusammenstellen einer Liste von Zellen mit zusätzlicher Kapazität als Kandidaten zum Schalten in den Ruhemodus basierend auf den geschätzten Lasten umfasst, wobei Zellen in der Liste in der Reihenfolge der geringsten Leistungs- und Betriebsmitteleffizienz eingestuft werden.

10. Verfahren nach Anspruch 9, wobei Schritt (iii) ein Belasten der Zellen mit zusätzlicher Kapazität, für die in Schritt (ii) bestimmt wird, dass sie nicht den Ruhemodus geschaltet werden, bis zu einem vorbestimmten Prozentsatz ihrer verfügbaren Betriebsmittel und anschließendes Überprüfen der Liste unter Berücksichtigung der Wirkung der Belastung auf die geschätzten Lasten anderer Zellen umfasst.

11. Verfahren nach einem der vorhergehenden Ansprüche, wobei die Zellen mit zusätzlicher Kapazität Pikozellen umfassen, und die Grundversorgungszellen Makrozellen umfassen.

12. Verfahren nach Anspruch 11, wobei das heterogene Netz ferner Mikrozellen umfasst, die als Grundversorgungszellen der Pikozellen und als Zellen mit zusätzlicher Kapazität der Makrozellen fungieren, wobei das Verfahren ferner erstens ein Durchführen der Schritte (ii) und (iii) mit den Mikrozellen als den Grundversorgungszellen der Pikozellen und zweitens mit den Makrozellen als den Grundversorgungszellen der Mikrozellen umfasst.

13. Verfahren nach Anspruch 11 oder 12, wobei das heterogene Netz ferner Femtozellen umfasst, und Schritt (i) ein Subtrahieren von den Lasten in individuellen Verkehrsregionen von Verkehr umfasst, von dem erwartet wird, dass er durch die Femtozellen abgewickelt wird.

14. SON-Server, der zum Ausführen des Verfahrens nach einem der vorhergehenden Ansprüche ausgelegt ist.

**Revendications**

1. Procédé de gestion d'un réseau hétérogène comportant des cellules de recouvrement de capacité supplémentaire (26; 28; 30; 32) et des cellules de couverture de base (10; 12; 14) pour desservir un trafic de communication sans fil d'utilisateurs, au moins les cellules de capacité supplémentaire (26; 28; 30; 32) ayant un mode actif et un mode veille, le procédé comprenant :

   (i) avec les utilisateurs assignés à des cellules spécifiques desdites cellules, la détermination des charges sur des régions de trafic individuel des cellules, et de la consommation d'énergie due au matériel de la station de base associé à ces cellules ;
   (ii) en se basant sur la considération des charges et de la consommation d'énergie déterminées à l'étape (i) pour les cellules de capacité supplémentaire (26; 28; 30; 32) et les cellules de couverture de base (10; 12; 14), la détermination du fait qu'une cellule de capacité supplémentaire (26; 28; 30; 32) est destinée à être mise en mode veille si $P_c \leq P_s$, où $P_c$ est l'augmentation de consommation d'énergie produite par le transfert d'utilisateurs d'une cellule de capacité supplémentaire (26; 28; 30; 32) vers une ou plusieurs cellules de couverture de base (10; 12; 14) et $P_s$ est l'économie d'énergie obtenue en faisant passer la cellule de capacité supplémentaire (26; 28; 30; 32) en mode veille ;
   (iii) pour les cellules de capacité supplémentaire (26; 28; 30; 32) dont on a déterminé qu'elles ne devaient pas être mises en mode veille à l'étape (ii), la détermination du fait que de l'énergie peut être économisée en transférant des utilisateurs d'une cellule de couverture de base (10; 12; 14) ou d'une autre cellule de capacité supplémentaire (26; 28; 30; 32) vers ces cellules de capacité supplémentaire (26; 28; 30; 32).

2. Procédé selon la revendication 1, dans lequel les déterminations sont appliquées pendant une période de temps prédéterminée et dans lequel à l'étape (i), la détermination de la charge comporte l'estimation de la charge attendue sur chaque région de trafic pendant une période de temps suivante.

3. Procédé selon la revendication 2, dans lequel une région de trafic est une région située à l'intérieur d'une ou plusieurs des cellules, dans laquelle la meilleure qualité de communication sans fil des utilisateurs se situe dans une cellule donnée et dans laquelle ladite qualité de communication sans fil se trouve dans une plage définie, ou dans laquelle une cellule donnée est sinon la mieux adaptée à la cellule desservie.

4.  Procédé selon la revendication 3, comprenant en outre la détermination de la qualité de communication sans fil de la région de trafic par rapport à une ou plusieurs cellules de desserte potentielle et cellules voisines, dans lequel, à l'étape (i), des utilisateurs sont assignés à la cellule fournissant la meilleure qualité de communication sans fil.

5.  Procédé selon la revendication 4, dans lequel l'étape (i) comprend en outre l'estimation de la charge sur chaque cellule sous la forme du pourcentage de ressources de communication sans fil disponibles dans la cellule, les cellules pour lesquelles la charge satisfait à une condition de seuil prédéterminée étant désignées comme actives pendant la période de temps suivante.

6.  Procédé selon la revendication 5, dans lequel l'étape (ii) comporte la détermination du fait qu'une cellule de couverture de base possède des ressources disponibles pour des utilisateurs transférés depuis une cellule de capacité supplémentaire.

7.  Procédé selon la revendication 5, dans lequel l'étape (ii) tient compte de l'économie d'énergie due au passage en mode veille du matériel de la station de base associée à une cellule de capacité supplémentaire, et de l'augmentation de puissance nécessitée par le matériel de la station de base associée aux cellules de couverture de base pour desservir les utilisateurs transférés depuis la cellule de capacité supplémentaire.

8.  Procédé selon la revendication 5, dans lequel l'étape (ii) fait la distinction entre les cellules de capacité supplémentaire situées entièrement dans une cellule de couverture de base et les cellules de capacité supplémentaire ne recouvrant que partiellement des cellules de couverture de base.

9.  Procédé selon la revendication 5, dans lequel l'étape (ii) comporte la compilation d'une liste de cellules de capacité supplémentaire en tant que candidates pour passer dans le mode veille en se basant sur les charges estimées, les cellules de la liste étant rangées dans l'ordre de moindre rendement d'énergie et de ressources.

10. Procédé selon la revendication 9, dans lequel l'étape (iii) comprend le chargement à un pourcentage prédéterminé de leurs ressources disponibles des cellules de capacité supplémentaire dont on a déterminé qu'elles ne devaient pas passer dans le mode veille à l'étape (ii), et après cela, la révision de ladite liste en tenant compte de l'effet dudit chargement sur les charges estimées des autres cellules.

11. Procédé selon l'une quelconque des revendications précédentes, dans lequel les cellules de capacité supplémentaire comportent des picocellules et les cellules de couverture de base comportent des macrocellules.

12. Procédé selon la revendication 11, dans lequel le réseau hétérogène comporte en outre des microcellules qui jouent le rôle de cellules de couverture de base des picocellules et de cellules de capacité supplémentaire des macrocellules, le procédé comprenant en outre l'exécution des étapes (ii) et (iii) premièrement avec les microcellules en tant que cellules de couverture de base des picocellules et deuxièmement avec les macrocellules en tant que cellules de couverture de base des microcellules.

13. Procédé selon la revendication 11 ou 12, dans lequel le réseau hétérogène comporte en outre des femtocellules et l'étape (i) comprend la soustraction, des charges sur les régions de trafic individuelles, du trafic dont on s'attend à ce qu'il soit desservi par les femtocellules.

14. Serveur SON agencé pour exécuter le procédé selon l'une quelconque des revendications précédentes.

FIG. 1

FIG. 2

FIG. 3

FIG. 4

Predict spatially accurate network load for $T_{n+1}$ Subtract the load to be taken by active Femto BS. ⌐302

Calculate Best serving SINR for load regions. Calculate second and third best SINR. Assign load regions to the best serving BS. ⌐304

Designate zero load Pico BS as OFF. For others, calculate load thresholds $N_1$, $N_2$, $N_3$ as per equations (3), (6) and (9). ⌐306

308 — Pico cell load < threshold ?
No → Designate Pico as ON for $T_{n+1}$ 310

Yes

319
Select the next Pico for assessment

Can underlay cells support Pico Load ? 312
No → Include Pico cell in List A. Indicate RBs needed and Micro, Macro BS. 314

Yes

316 — Designate Pico as OFF for $T_{n+1}$. Assign load to Micro(s)/ Macro(s) and update RB usage

No → Are all Pico cells evaluated ? ⌐318

Yes

Rank Pico cells in List A as per (least) power efficiency and resource efficiency ⌐320

Absorb more load* to 'ON' designated Pico cells increasing their load up to 95% ⌐322

Use RBs released from above step to facilitate switching OFF more Pico BS from List A ⌐324

Designate remaining Pico cells in List A as ON and absorb more load* from the underlay cells. ⌐326

## FIG. 5

Designate zero load Micro BSs as OFF. For others, calculate load threshold $N_4$ as per equation (12). ⎰402

406

404 — Micro cell load < $N_4$ ? — No — Designate Micro as ON for $T_{n+1}$

Yes

416

Select the next Micro BS for assessment

Can underlay cells support Micro Load ? — No — Include Micro cell in List B. Indicate RBs needed and Macro BSs.

408 —

410

Yes

412 — Designate Micro as OFF for $T_{n+1}$. Assign load to Macro(s) and update RB usage

No — Are all Micro cells evaluated ? — 414

Yes

Rank Micro cells in List B as per (least) power efficiency and resource efficiency ⎰418

Absorb more load* to 'ON' designated Micro cells, increasing their load up to 95% ⎰420

Use RBs released from above step to facilitate switching OFF more Micro BS from List B ⎰422

Designate remaining Micro cells in List B as ON and absorb more load* from the underlay Macro BSs. ⎰424

FIG. 6